# EUROPEAN PATENT SPECIFICATION

(11) **EP 1 773 499 B1**
(45) Date of publication and mention of the grant of the patent: **03.06.2009**
(21) Application number: 05756417.1
(22) Date of filing: 16.06.2005
(51) Int. Cl.: B04C 5/24, B65G 53/60

(54) **PNEUMATIC CONVEYING DEVICE FOR BULK MATERIAL**
PNEUMATISCHE FÖRDERVORRICHTUNG FÜR SCHÜTTMATERIAL
DISPOSITIF DE TRANSPORT PNEUMATIQUE POUR MATERIAU EN VRAC

(30) Priority: 18.06.2004 GB 0413671
(43) Date of publication of application: 18.04.2007
(73) Proprietor: Clyde Materials Handling Limited, 1 Redwood Crescent Peel Park East Kilbride G74 5PA (GB)
(72) Inventor: SNOWDON, Brian, Tichill, Doncaster DN11 9UJ (GB)
(74) Representative: Sanderson, Nigel Paul
(86) International application number: PCT/GB2005/002374
(87) International publication number: WO 2005/123262

(56) References cited:
- DE-A1- 3 212 210
- US-A- 1 928 702
- US-A- 3 809 438
- US-A- 3 814 331
- PATENT ABSTRACTS OF JAPAN vol. 017, no. 554 (C-1118), 6 October 1993 (1993-10-06) & JP 05 156267 A (BABCOCK HITACHI KK), 22 June 1993 (1993-06-22)

## Description

### Field of the invention

This invention relates to methods and apparatus for delivering dry bulk material to a location where the material is to be processed.

### Background to the invention

For certain types of industrial processes there is a need to feed either powdered or granular dry bulk material to a burner or other device for processing the material. Desirably the material should be fed to the processing point in a smooth and even way so as to improve the processing, for instance, combustion of a fuel or the conversion of the material into a different form. Examples of such processes include the feed of metallic concentrate into a "flash fumace", for instance, the type used in copper smelting.

One current method makes use of a mechanical feeder, such as a drag chain conveyor, to convey material to either side of a downwardly operating burner. The burner does not function well due to an incomplete and variable feed pattern around the burner inlet. Furthermore, pulsations in the feed due to the use of the drag chain conveyor results in the material coming off the end of the conveyor in surges as each slat of the conveyor feeds material into the burner.

This unevenness of feed reduces the efficiency of the burner and also the production efficiency of the flash furnace.

US 1/928,702 describes a dust separating apparatus including a cyclone vessel having four tangential inlets.

### Statements of the invention

According to the present invention there is provided apparatus for delivering a bulk material to a location where said bulk material is to be processed, the apparatus comprising: means for feeding a flow of said bulk material carried in a conveying gas substantially tangentially into a cylindrical vessel (1) via at least two circumferentially spaced apart tangential inlets (14); and an outlet (10) through which the material is discharged, characterised in that the material is fed through said inlets (14) at a speed such that the bulk material within the vessel adopts a tubular configuration (8), and in that the bulk material passes from the vessel to said location through said outlet (10) while maintaining its tubular configuration.

The present invention also provides a method for delivering a bulk material to a location where said bulk material is to be processed, the method comprising feeding a flow of said bulk material carried in a conveying gas substantially tangentially into a cylindrical vessel (1) via at least two inlets (14) and discharging said bulk material from said vessel to said location via an outlet (10) at one end of the vessel characterised in that the material is fed through said inlets (14) at a speed such that the bulk material within the vessel is of tubular configuration, and in that the bulk material exits the outlet (10) in a tubular configuration to said location.

The bulk material may be, for instance, a powder or in granular form.

Preferably the means for feeding the bulk material to the vessel is a pneumatic conveying means.

The benefit of the formation of the bulk material in a tubular or annular configuration, that is to say, into the form of a circular hollow sleeve, is to improve the combustion or other reaction efficiency by presenting a smooth, circular material flow such that there is an evenness of flow around the full 360° circumference of the discharge from the vessel to the burner, reactor or furnace feed system.

The vessel, in effect a cyclonic device, is provided with at least two tangentially arranged inlets which are circumferentially spaced apart tangential although typically there are four, circumferentially and equally spaced apart tangential inlets. The use of multiple inlets assists in the building up of the even, revolving sleeve of material until there is sufficient material to flow out of the vessel outlet.

Preferably the outlet of the vessel has a diameter which, while less than that of the vessel itself, is nonetheless relatively large in relation to the vessel diameter.

The vessel can be arranged in any orientation, for instance about a horizontal or vertical axis.

Preferably apparatus of the present invention includes means for splitting the material to be fed to the vessel into a plurality of material streams, each stream being fed to a respective tangential vessel inlet. Such a flow splitting device preferably divides the material, and the associated gas flow, into a number of equal flows with a split accuracy of within ±5%.

Preferably the velocity of entry of the gas entering the cyclonic vessel is between 5 and 40 metres/second in order to create the revolving flow of material in the vessel.

Preferably the vessel is additionally provided with means for feeding gas directly thereto.

In another preferred embodiment, the vessel may be provided with means for removing a proportion of material transporting gas.

In one preferred embodiment, the vessel forms the material entry point into a flash furnace burner.

In another preferred embodiment of the present invention, the apparatus is provided with means for feeding different materials into the vessel within which the materials become mixed together. Where the apparatus is provided with a flow-splitting device, the mixing of the materials may take place within this device, within the vessel or within both.

The present invention further includes a method of producing a hollow tube of bulk material within a pneumatic conveying system so as to improve the efficiency of burners or other processing devices.

As indicated above, the vessel, as well as acting as a cyclonic device creating the tubular flow of material, can be used to enable additional air or gas to be added to the central core of the flow or for either a part or all of the transporting gas to be removed before the combined material and gas enters the process. This is useful for furnaces with a reducing atmosphere where excess transport gas is required to be removed or where additional gas or air can be added without disturbing the concentrated circular hollow sleeve of material.

The pneumatic conveying system which may form part of apparatus in accordance with the present invention can be, for instance, a lean phase rotary valve system or a higher pressure continuous feeding system so as to reduce the amount of transport gas entering the device and process. If it is required to add gas to or remove gas from the vessel, this can be achieved through a central connection at that end remote from the outlet. This central connection will normally be of a smaller diameter than that of the main body of the vessel. It will be appreciated that, if gas is removed, there will also be the removal of a small proportion of the material because the device, acting as a cyclone, is not 100% efficient in separating material from transport gas.

Apparatus in accordance with the present invention is ideally suited to feeding metal concentrates to so-called flash furnaces. The objective is to create a smooth rotating sleeve of material that exits the outlet of the vessel with equal amounts of material being discharged around the circumference of the outlet so that there is an even mixture of material and air which improves the efficiency of combustion or the efficiency of any other reaction process.

For certain applications, such as those with large conveying rates, it may be advantageous to feed material using a plurality of feeding devices from the storage location of the material and to use the cyclonic vessel to join together these separate conveying steams. For instance a single rotary valve material feeding device may be replaced by four such devices. The four conveying pipes therefrom are then connected directly to the cyclonic vessel and the four streams of material are blended together in the vessel.

In a similar way, the apparatus may be used to mix together different materials such as ore concentrate and powdered flux before entry to a burner or feed point into a furnace. In the case where the proportion of this addition is small, it may be added through only one of the feed pipes into the cyclonic vessel. Alternatively it could be fed into the conveying pipe between a single material feeding device and a flow splitting device so as to achieve mixing in both the flow splitting device and the cyclonic vessel.

### Brief description of the drawings

The accompanying drawings illustrate examples of the present invention and are as follows:
**Figure 1** shows diagrammatically a complete system incorporating the invention;
**Figures 2a and 2b** are a longitudinal section and plan view respectively of the cyclonic vessel to the system of Figure 1;
**Figures 3a and 3b** show a longitudinal section and a plan view of a material flow splitter for use in the system of Figure 1;
**Figures 4a and 4b** are a longitudinal section and plan view respectively of an alternative cyclonic vessel which can be used in the system as shown in Figure 1; and
**Figure 5** is a longitudinal section showing a cyclonic vessel forming part of apparatus in accordance with the present invention and fitted to a flash furnace burner for metal production.

### Detailed description of the invention

The present invention will now be described in further detail, with reference to the accompanying drawings.

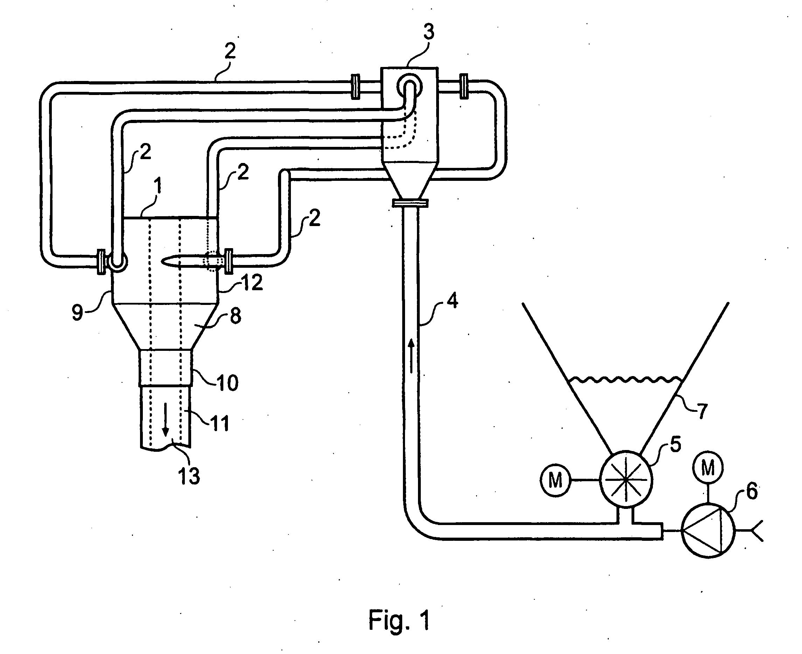

Referring to Figure 1 of the accompanying drawings, apparatus in accordance with the present invention includes a vessel 1 in the form of a cyclonic collection and feeding device which is connected by four conveying conduits 2 to a flow splitter device 3. The flow splitter device 3 is pneumatically fed with material and transport gas through conveying conduit 4 which is connected to a rotary valve material feeding device 5. A conveying gas blower or compressor 6 provides the conveying gas. Material for conveying is stored in feed hopper 7.

Bulk material is fed into vessel 1 tangentially in such a way as to cause the material in the device to rotate at sufficient speed to ensure the rotating mass of material 8 is forced against the walls of the device 9.

Within the device, the level of bulk material builds up until it flows down an exit pipe 10 as a smooth, thin concentrated hollow sleeve 11. The exit pipe 10 is of smaller diameter than the main body 12 of vessel 1 but is nonetheless of substantial diameter, compared with that of the main body of the vessel. Transport gas 13 flows out of the device in the centre of the sleeve 11.

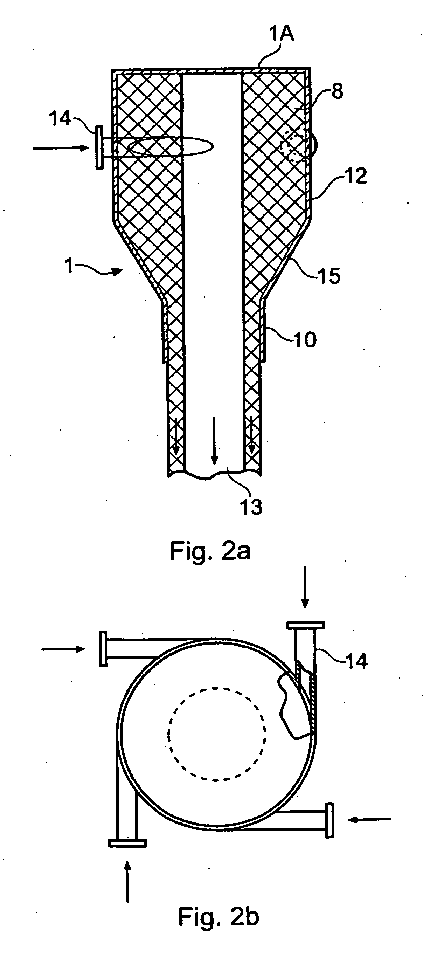

Referring to Figures 2a and 2b, there is illustrated one form of vessel 1 for use with the system described above. The vessel is of generally cylindrical shape having a closed end 1A, a main body portion 1B from which extends a narrowing, frusto-conical portion 1C terminating in an outlet 10 having a diameter roughly half that of the main body portion 1B.

Main body portion 1B is provided with four circumferentially and equally spaced apart tangential inlets 14. In use, each inlet will be fed with an approximately equal amount of material and gas for entry into the vessel 1. The velocity of the transporting gas is in the range of from 5 to 40 metres per second in order to maintain the centrifugal effect. The tangential mounting of the inlets 14 on vessel 1 ensures that the metal and transport gas are directed around the walls of vessel 1. A rotating mass of material builds up with the lighter transport gas moving to the centre of the device. The frusto-conical section 15 is such that the dense rotating mass of material builds up until it spills over into the discharge pipe 10. As a result the material leaves the device in a concentrated hollow sleeve of even thickness and density.

By using at least four inlets 14, it is possible to achieve a high throughput, within a relatively small cyclonic vessel 1, whilst achieving a smooth tubular flow pattern.

This tubular flow pattern is maintained even with a relatively long discharge pipe 10. The separated gas flow may have a different forward velocity to that of the material.

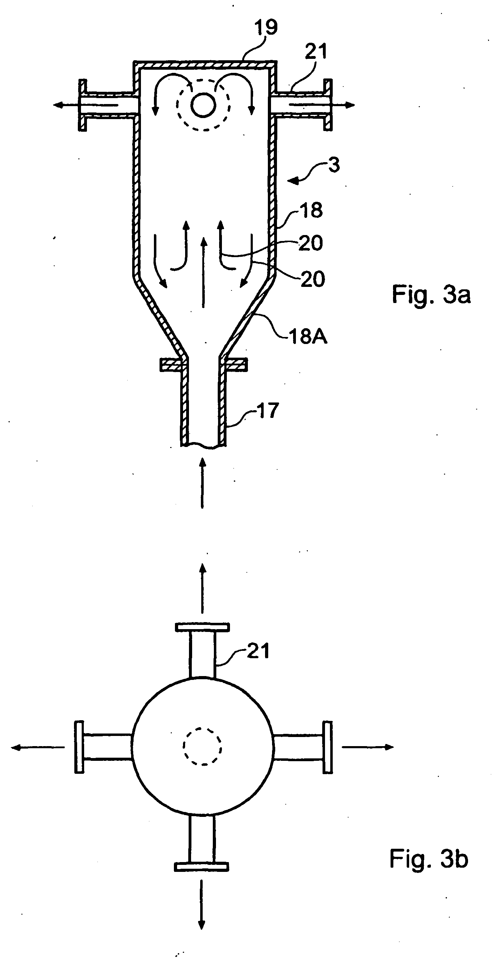

Referring to Figures 3a and 3b, there is illustrated the flow splitter 3 in greater detail. The splitter of Figures 3a and 3b divides the material and transport gas flow into four equal flows. In other splitters, the numbers of outlets can be from two to eight or even more. Material enters the splitter 3 vertically through inlet pipe 17. The splitter is a substantially cylindrical vessel having a main body portion 18 of constant diameter, a closed end 19 and, opposite closed end 19, frusto-conical portion 18A leading to the narrow inlet pipe 17. This arrangement results in a material flow pattern, indicated by arrows 20, which is similar to that in a circulating fluid bed. The homogenous fluid-like mixture leaves the device through four discharge pipes 21 arranged circumferentially and equally spaced apart at locations close to closed end 19, each discharge pipe 21 extending radially outwardly from the body portion 18 of splitter 3.

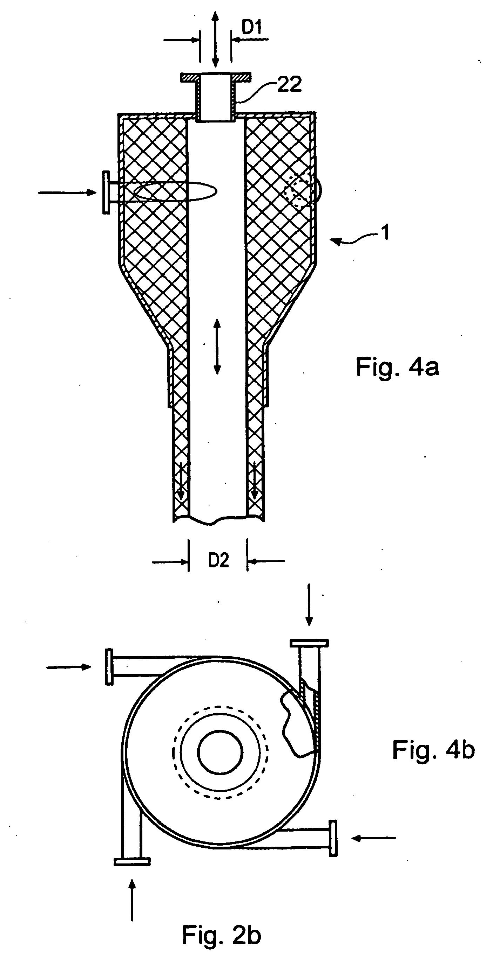

Referring to Figures 4a and 4b of the accompanying drawings, there is illustrated an alternative form of cyclonic vessel 1. In this case the vessel 1 is provided with an upper connection 22 which allows conveying gas to be removed or additional gas to be added. The diameter D1 of connection 22 is smaller than the inner core diameter D2 of the rotating mass of material so as not to remove excessive amounts of material when removing gas or disturbing the material flow when adding gas.

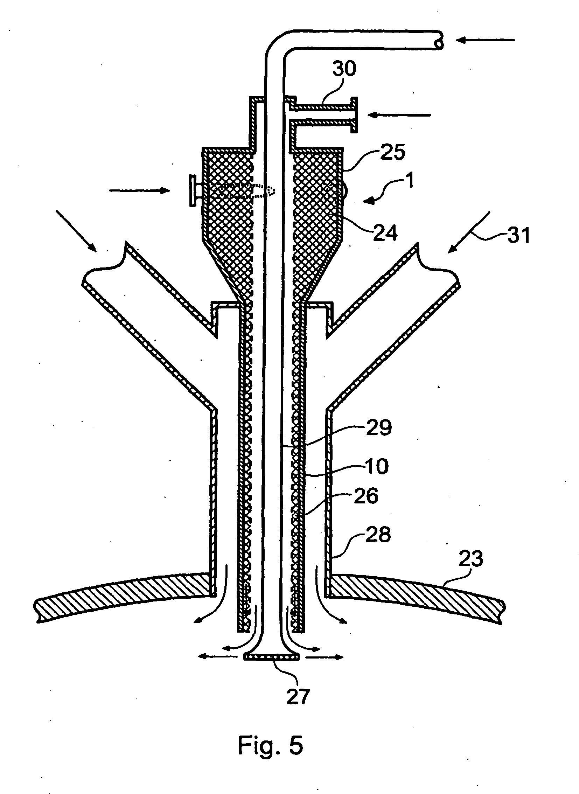

Referring to Figure 5 of the accompanying drawings, there is shown in detail a cyclonic vessel 1 fitted to a flash furnace burner or material dispersing system used for smelting metallic ore concentrate. The arrangement is mounted in the roof 23 of the furnace. The powdered mineral concentrate 24 is conveyed to the main body 25 of cyclonic vessel 1 and forms a hollow tube of material 26 that progresses downwardly through discharge pipe 10 and exits into the furnace.

The arrangement is also provided with a central air feed pipe 29 which extends centrally through cyclonic vessel 1 and discharge pipe 10 terminating, below the free lower end of discharge pipe 10, in a dispersal element 27 which is provided with air jets arranged to disperse the bulk material evenly into the combustion air 31 supplied through a surrounding circular pipe 28.

The upper end of cyclonic vessel 1 is provided with a central inlet, an associated pipe 30, through which additional gas may be fed into vessel one to increase the downward velocity of the material concentrate.

## Claims

1. Apparatus for delivering a bulk material (24) to a location where said bulk material (24) is to be processed, the apparatus comprising: means (2) for feeding a flow of said bulk material (24) carried in a conveying gas substantially tangentially into a cylindrical vessel (1) via at least two circumferentially spaced apart tangential inlets (14); and an outlet (10) through which the bulk material (24) is discharged, **characterised in that** said bulk material (24) is fed through said inlets (14) at a speed such that the bulk material (24) within the vessel (1) adopts a tubular configuration (8), and **in that** the bulk material (24) passes from the vessel (1) to said location through said outlet (10) while maintaining its tubular configuration.

2. Apparatus according to Claim 1, wherein the bulk material (24) is a powder or in granular form.

3. Apparatus according to Claim 1 or Claim 2, wherein the means for feeding the bulk material (24) to the vessel (1) is a pneumatic conveying means (6).

4. Apparatus according to any of the preceding claims, wherein the vessel (1) is provided with four, circumferentially and equally spaced apart, tangential inlets (14).

5. Apparatus according to any of the preceding claims, wherein the vessel (1) has a main body (12) and a conical section (15) such that the diameter of outlet (10) is less than that of the main body (12), such that the rotating mass of material builds up until it falls as a sleeve through outlet (10).

6. Apparatus according to any of the preceding claims and further including means (3) for splitting the material to be fed to the vessel (1) into a plurality of material streams (2), each stream being fed to a respective tangential vessel inlet.

7. Apparatus according to any of the preceding claims, wherein the velocity of entry of the conveying gas entering the vessel (1) is between 5 and 40 metres/second in order to create a revolving flow of bulk material (24) in the vessel.

8. Apparatus according to any of the preceding claims, wherein the vessel (1) is additionally provided with means (22) for feeding gas directly thereto.

9. Apparatus according to any of the preceding claims, wherein the vessel (1) is provided with means (22) for removing a proportion of material transporting gas.

10. Apparatus according to any of the preceding claims, wherein the vessel (1) forms a bulk material (24) entry point into a flash furnace burner (23).

11. Apparatus according to any of the preceding claims including means for feeding different bulk materials (24) into the vessel (1) within which the bulk materials (24) become mixed together.

12. A method for delivering a bulk material (24) to a location where said bulk material (24) is to be processed, the method comprising feeding a flow of said bulk material (24) carried in a conveying gas substantially tangentially into a cylindrical vessel (1) via at least two inlets (14) and discharging said bulk material (24) from said vessel (1) to said location via an outlet (10) at one end of the vessel (1) **characterised in that** the bulk material (24) is fed through said inlets (14) at a speed such that the bulk material (24) within the vessel (1) is of tubular configuration, and **in that** the bulk material (24) exits the outlet (10) in a tubular configuration to said location.

## Patentansprüche

1. Vorrichtung zum Liefern von Schüttmaterial (24) zu einem Ort, wo das genannte Schüttmaterial (24) verarbeitet werden soll, wobei die Vorrichtung Folgendes umfasst: ein Mittel (2) zum Führen eines Stroms des genannten Schüttmaterials (24), das in einem Fördergas transportiert wird, im Wesentlichen tangential über wenigstens zwei umfangsmäßig beabstandete tangentiale Eingänge (14) in ein zylindrisches Gefäß (1); und einen Ausgang (10), durch den das Schüttmaterial (24) abgelassen wird, **dadurch gekennzeichnet, dass** das genannte Schüttmaterial (24) mit einer solchen Geschwindigkeit durch die genannten Eingänge (14) geführt wird, dass das Schüttmaterial (24) in dem Gefäß (1) eine röhrenförmige Konfiguration (8) annimmt, und dadurch, dass das Schüttmaterial (24) von dem Gefäß (1) zu dem genannten Ort durch den genannten Ausgang (10) läuft, während es seine röhrenförmige Konfiguration beibehält.

2. Vorrichtung nach Anspruch 1, wobei das Schüttmaterial (24) ein Pulver ist oder in Granulatform vorliegt.

3. Vorrichtung nach Anspruch 1 oder Anspruch 2, wobei das Mittel zum Führen des Schüttmaterials (24) zum Gefäß (1) ein Druckluftfördermittel (6) ist.

4. Vorrichtung nach einem der vorherigen Ansprüche, wobei das Gefäß (1) mit vier umfangsmäßig und gleichmäßig beabstandeten tangentialen Eingängen (14) versehen ist.

5. Vorrichtung nach einem der vorherigen Ansprüche, wobei das Gefäß (1) einen Hauptkörper (12) und einen konischen Abschnitt (15) hat, so dass der Durchmesser des Ausgangs (10) kleiner als der des Hauptkörpers 12 ist, so dass sich die rotierende Materialmasse ansammelt, bis sie als Zylinder durch den Ausgang (10) fällt.

6. Vorrichtung nach einem der vorherigen Ansprüche, die ferner Folgendes beinhaltet: ein Mittel (3) zum Aufteilen des zum Gefäß (1) zu führenden Materials in mehrere Materialströme (2), wobei jeder Strom zu einem entsprechenden tangentialen Gefäßeingang geführt wird.

7. Vorrichtung nach einem der vorherigen Ansprüche, wobei die Eintrittsgeschwindigkeit des in das Gefäß (1) eintretenden Fördergases zwischen 5 und 40 Meter/Sekunde liegt, um eine Drehströmung aus Schüttmaterial (24) in dem Gefäß zu erzeugen.

8. Vorrichtung nach einem der vorherigen Ansprüche, wobei das Gefäß (1) zusätzlich ein Mittel (22) aufweist, das Gas direkt dorthin führt.

9. Vorrichtung nach einem der vorherigen Ansprüche, wobei das Gefäß (1) mit einem Mittel (22) zum Entfernen eines Teils des materialtransportierenden Gases ausgestattet ist.

10. Vorrichtung nach einem der vorherigen Ansprüche, wobei das Gefäß (1) eine Eintrittsstelle in einen Flash-Ofenbrenner (23) für das Schüttmaterial (24) bildet.

11. Vorrichtung nach einem der vorherigen Ansprüche, die ein Mittel zum Führen verschiedener Schüttmaterialien (24) in das Gefäß (1) beinhaltet, in dem die Schüttmaterialien (24) miteinander vermischt werden.

12. Verfahren zum Liefern eines Schüttmaterials (24) zu einem Ort, wo das genannte Schüttmaterial (24) verarbeitet werden soll, wobei das Verfahren die folgenden Schritte beinhaltet: Führen eines Stroms des genannten Schüttmaterials (24), das in einem Fördergas transportiert wird, im Wesentlichen tangential über wenigstens zwei Eingänge (14) in ein zylindrisches Gefäß (1) und Ablassen des genannten Schüttmaterials (24) aus dem genannten Gefäß (1) zu dem genannten Ort über einen Ausgang (10) an einem Ende des Gefäßes (1), **dadurch gekennzeichnet, dass** das Schüttmaterial (24) durch die genannten Eingänge (14) mit einer solchen Geschwindigkeit geführt wird, dass das Schüttmaterial (24) in dem Gefäß (1) eine röhrenförmige Konfiguration annimmt, und dadurch, dass das Schüttmaterial (24) den Ausgang (10) in einer röhrenförmigen Konfiguration zu dem genannten Ort verlässt.

## Revendications

1. Appareil servant à transporter un matériau en vrac (24) vers un emplacement où ledit matériau en vrac (24) est destiné à être traité, l'appareil comprenant : des moyens (2) pour amener un flux dudit matériau en vrac (24) acheminé dans un gaz véhiculeur dans un réservoir cylindrique (1) de façon sensiblement tangentielle, par l'intermédiaire d'au moins deux orifices d'admission (14) tangentiels espacés l'un de l'autre dans le plan circonférentiel ; et un orifice de sortie (10) à travers lequel le matériau en vrac (24) est déchargé, **caractérisé en ce que** ledit matériau en vrac (24) est introduit à travers lesdits orifices d'admission (14) suivant une vitesse telle que le matériau en vrac (24) présent dans le réservoir (1) adopte une configuration tubulaire (8), et **en ce que** le matériau en vrac (24) passe du réservoir (1) vers ledit emplacement à travers ledit orifice de sortie (10) tout en conservant sa configuration tubulaire.

2. Appareil selon la revendication 1, le matériau en vrac (24) étant une poudre ou se présentant sous forme de granulés.

3. Appareil selon la revendication 1 ou la revendication 2, les moyens utilisés pour amener le matériau en vrac (24) vers le réservoir (1) étant un moyen de transport pneumatique (6).

4. Appareil selon l'une quelconque des revendications précédentes, le réservoir (1) étant doté de quatre orifices d'admission (14) tangentiels et équidistants l'un de l'autre dans le plan circonférentiel.

5. Appareil selon l'une quelconque des revendications précédentes, le réservoir (1) comportant un corps principal (12) et une section conique (15) de sorte que le diamètre de l'orifice de sortie (10) est inférieur à celui du corps principal (12), de sorte que la masse en rotation du matériau s'accumule jusqu'à ce qu'elle tombe sous forme de manchon à travers l'orifice de sortie (10).

6. Appareil selon l'une quelconque des revendications précédentes, et incluant en outre des moyens (3) pour diviser le matériau destiné à être alimenté au réservoir (1) en une pluralité de flux (2) de matériau, chaque flux étant acheminé vers un orifice d'admission tangentiel respectif du réservoir.

7. Appareil selon l'une quelconque des revendications précédentes, la vitesse d'arrivée du gaz véhiculeur pénétrant dans le réservoir (1) se situant entre 5 et 40 mètres/seconde afin de créer un flux rotatif de matériau en vrac (24) dans le réservoir.

8. Appareil selon l'une quelconque des revendications précédentes, le réservoir (1) étant additionnellement pourvu de moyens (22) pour assurer une alimentation directe de gaz à celui-ci.

9. Appareil selon l'une quelconque des revendications précédentes, le réservoir (1) étant doté de moyens (22) servant à éliminer une proportion de gaz véhiculeur de matériau.

10. Appareil selon l'une quelconque des revendications précédentes, le réservoir (1) constituant un point d'entrée de matériau en vrac (24) se rendant dans un brûleur de four de fusion éclair (23).

11. Appareil selon l'une quelconque des revendications précédentes, comprenant des moyens pour amener différents matériaux en vrac (24) dans le réservoir (1) à l'intérieur duquel les matériaux en vrac (24) vont être mélangés les uns aux autres.

12. Procédé servant à transporter un matériau en vrac (24) vers un emplacement où ledit matériau en vrac (24) est destiné à être traité, le procédé comprenant les opérations consistant à amener un flux dudit matériau en vrac (24) acheminé dans un gaz véhiculeur dans un réservoir cylindrique (1) de façon sensiblement tangentielle, par l'intermédiaire d'au moins deux orifices d'admission (14), et à décharger ledit matériau en vrac (24) à partir dudit réservoir (1) vers ledit emplacement par l'intermédiaire d'un orifice de sortie (10) ménagé au niveau d'une extrémité du réservoir (1), **caractérisé en ce que** le matériau en vrac (24) est introduit à travers lesdits orifices d'admission (14) suivant une vitesse telle que le matériau en vrac (24) présent dans le réservoir (1) a une configuration tubulaire (8), et **en ce que** le matériau en vrac (24) sort de l'orifice de sortie (10) dans une configuration tubulaire en direction dudit emplacement.
